(19)

**Europäisches Patentamt**
**European Patent Office**
**Office européen des brevets**

(11) **EP 4 755 564 A1**

(12) **EUROPEAN PATENT APPLICATION**

(43) Date of publication:
**10.06.2026 Bulletin 2026/24**

(21) Application number: **25220198.3**

(22) Date of filing: **02.12.2025**

(51) International Patent Classification (IPC):
***B23K 9/10*** *(2006.01)*

(52) Cooperative Patent Classification (CPC):
**B23K 9/1043; B23K 9/1062**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **05.12.2024 US 202463728436 P**
**18.11.2025 US 202519392498**

(71) Applicant: **Illinois Tool Works Inc.**
**Glenview IL 60025 (US)**

(72) Inventor: **VAHID, Sina**
**Glenview, 60025 (US)**

(74) Representative: **HGF**
**HGF Limited**
**4th Floor, 1 City Square**
**Leeds LS1 2ES (GB)**

(54) **MIXED SWITCH POWER CONVERTER FOR ARC WELDING**

(57) Systems and methods are provided for implementing and utilizing mixed switch power converter for arc welding. A power converter may be configured for handling a high speed advanced welding process, with the power converter incorporating a circuit topology that includes a low-side buck converter circuit and a recycler circuit. The low-side buck converter circuit includes an input circuit and a modulation circuit, and a low-side of the recycler circuit may be connected to an intermediate point in the modulation circuit of the low-side buck converter circuit.

FIG. 3

**Description**

CLAIM OF PRIORITY

This patent application claims priority to and claims benefit from United States Provisional Patent Application Serial No. 63/728,436, filed on December 5, 2024. The above identified application is hereby incorporated herein by reference in its entirety.

BACKGROUND

Welding has become increasingly ubiquitous. Welding can be performed in an automated manner or in a manual manner (e.g., being performed by a human). Equipment or components used during welding operations may be driven using engines. For example, engines may be used to drive, for example, generators, power sources, etc. used during welding operations.

In some instances, conventional welding-type systems may have some limitations and/or disadvantages. For example, welding-type systems may have limitations with respect to handling power supply for different types of weld processes.

Further limitations and disadvantages of conventional approaches will become apparent to one skilled in the art, through comparison of such approaches with some aspects of the present systems and methods set forth in the remainder of this disclosure with reference to the drawings.

BRIEF SUMMARY

Aspects of the present disclosure relate to welding solutions. More specifically, various implementations in accordance with the present disclosure are directed to systems and methods for mixed switch power converter for arc welding, substantially as illustrated by or described in connection with at least one of the figures, and as set forth more completely in the claims.

These and other advantages, aspects and novel features of the present disclosure, as well as details of an illustrated implementation thereof, will be more fully understood from the following description and drawings.

BRIEF DESCRIPTION OF THE DRAWINGS

Fig. 1 shows an example welding-type setup.
Fig. 2 illustrates an example regulated metal deposition (RMD) process and the corresponding current waveform.
Fig. 3 illustrates an example two-quadrant buck converter.
Fig. 4 illustrates example parallel switches in high-side position and low-side position.
Fig. 5 illustrates an example low-side buck converter.

Fig. 6 illustrates an example power control topology with low-side buck converter with recycler.
Fig. 7 illustrates different modes of operation for a power control topology with low-side buck converter with recycler.

DETAILED DESCRIPTION

As utilized herein, the terms "circuits" and "circuitry" refer to physical electronic components (e.g., hardware), and any software and/or firmware ("code") that may configure the hardware, be executed by the hardware, and/or otherwise be associated with the hardware. As used herein, for example, a particular processor and memory (e.g., a volatile or non-volatile memory device, a general computer-readable medium, etc.) may comprise a first "circuit" when executing a first one or more lines of code and may comprise a second "circuit" when executing a second one or more lines of code. Additionally, a circuit may comprise analog and/or digital circuitry. Such circuitry may operate, for example, on analog and/or digital signals. It should be understood that a circuit may be in a single device or chip, on a single motherboard, in a single chassis, in a plurality of enclosures at a single geographical location, in a plurality of enclosures distributed over a plurality of geographical locations, etc. Similarly, the term "module" may, for example, refer to a physical electronic components (e.g., hardware) and any software and/or firmware ("code") that may configure the hardware, be executed by the hardware, and/or otherwise be associated with the hardware.

As utilized herein, circuitry or module is "operable" to perform a function whenever the circuitry or module comprises the necessary hardware and code (if any is necessary) to perform the function, regardless of whether performance of the function is disabled or not (e.g., by a user-configurable setting, factory trim, etc.).

As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y and/or z" means "one or more of x, y, and z." As utilized herein, the term "exemplary" means serving as a non-limiting example, instance, or illustration. As utilized herein, the terms "for example" and "e.g." set off lists of one or more non-limiting examples, instances, or illustrations.

Welding-type power, as used herein, refers to power suitable for welding, plasma cutting, induction heating, CAC-A (carbon arc cutting/air) and/or hot wire welding/preheating (including laser welding and laser cladding). Welding-type power supply, as used herein, refers to a power supply that can provide welding-type power. A welding-type power supply may include power generation components (e.g., engines, generators, etc.) and/or power conversion circuitry to convert primary power (e.g., engine-driven power generation, mains power, etc.) to welding-type power.

Welding-type operations, as used herein, comprise operations in accordance with any known welding technique, including flame welding techniques such as oxy-fuel welding, electric welding techniques such as shielded metal arc welding (e.g., stick welding), metal inert gas welding (MIG), tungsten inert gas welding (TIG), resistance welding, as well as gouging (e.g., carbon arc gouging), cutting (e.g., plasma cutting), brazing, induction heating, soldering, and/or the like.

Welding-type setup, as used herein, refers to any setup comprising welding related devices or equipment (e.g., welding power sources, welding torch, welding gear such as headwear and the like, auxiliary devices or systems, etc.) which are used in facilitating and/or in conjunction with welding-type operations.

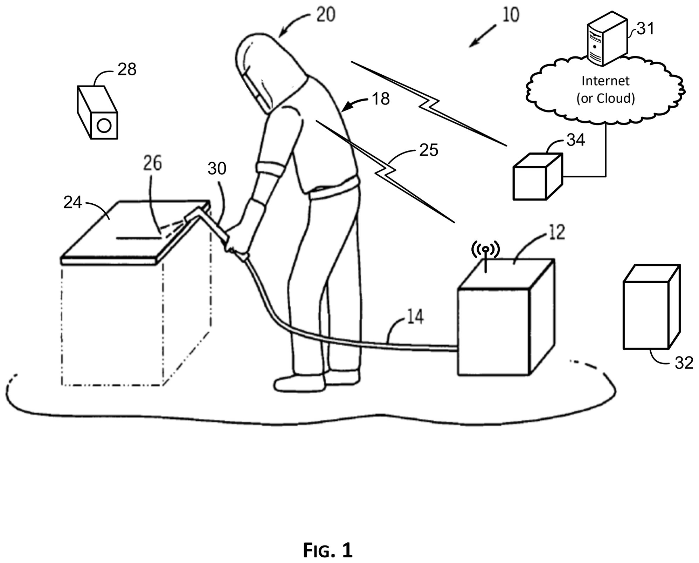

Fig. 1 shows an example welding-type setup. Referring to Fig. 1, there is shown an example welding-type setup 10 in which an operator (user) 18 is wearing welding headwear 20 and welding a workpiece 24 using a torch 30 to which power is delivered by equipment 12 via a conduit 14, with weld monitoring equipment 28, which may be available for use in monitoring welding operations.

The equipment 12 may comprise a power source, optionally a source of a shield gas and, where wire/filler material is to be provided automatically, a wire feeder. Further, in some instances an engine 32 may be used to drive equipment or components used during welding operations. The engine 32 may comprise a gas engine or a liquefied petroleum (LP) engine. The engine 32 may drive generators, power sources, etc. used during welding operations.

The welding-type setup 10 of Fig. 1 may be configured to form a weld joint by any known welding-type technique. For example, optionally in any implementation, the welding equipment 12 may be arc welding equipment that provides a direct current (DC) or alternating current (AC) to a consumable or non-consumable electrode of a torch 30. The electrode delivers the current to the point of welding on the workpiece 24. In the welding-type setup 10, the operator 18 controls the location and operation of the electrode by manipulating the torch 30 and triggering the starting and stopping of the current flow. In other implementations, a robot or automated fixture may control the position of the electrode and/or may send operating parameters or trigger commands to the welding system. When current is flowing, an arc 26 is developed between the electrode and the workpiece 24. The conduit 14 and the electrode thus deliver current and voltage sufficient to create the electric arc 26 between the electrode and the workpiece. The arc 26 locally melts the workpiece 24 and welding wire or rod supplied to the weld joint (the electrode in the case of a consumable electrode or a separate wire or rod in the case of a non-consumable electrode) at the point of welding between electrode and the workpiece 24, thereby forming a weld joint when the metal cools.

Optionally in any implementation, the weld monitoring equipment 28 may be used to monitor welding operations. The weld monitoring equipment 28 may be used to monitor various aspects of welding operations, particularly in real-time (that is as welding is taking place). For example, the weld monitoring equipment 28 may be operable to monitor arc characteristics such as length, current, voltage, frequency, variation, and instability. Data obtained from the weld monitoring may be used (e.g., by the operator 18 and/or by an automated quality control system) to ensure proper welding.

As shown, the equipment 12 and headwear 20 may communicate via a link 25 via which the headwear 20 may control settings of the equipment 12 and/or the equipment 12 may provide information about its settings to the headwear 20. Although a wireless link is shown, the link may be wireless, wired, or optical.

Optionally in any implementation, equipment or components used during welding operations may be driven using engines. For example, the engine 32 may drive generators, power sources, etc. used during welding operations. In some instances, it may be desired to obtain information relating to used engines. For example, data relating to engines (and operations thereof) used during welding operations may be collected and used (e.g., based on analysis thereof) in monitoring and optimizing operations of these engines. The collection and use of such data may be performed telematically-that is, the data may be collected locally, subjected to at least some processing locally (e.g., formatting, etc.), and then may be communicated to remote management entities (e.g., centralized management locations, engine providers, etc.), using wireless technologies (e.g., cellular, satellite, etc.).

Optionally in any implementation, a dedicated controller (e.g., shown as element 34 in Fig. 1) may be used to control, centralize, and/or optimize data handling operations. The controller 34 may comprise suitable circuitry, hardware, software, or any combination thereof for use in performing various aspects of the engine related data handling operations. For example, the controller 34 may be operable to interface with the engine 32 to obtain data related thereto. The controller 34 may track or obtain welding related data (e.g., from weld monitoring equipment 28, from equipment 12, etc.). The controller 34 may then transmit the data (e.g., both engine related and weld related data), such as to facilitate remote monitoring and/or management, by way of wireless communications. This may be done using cellular and/or satellite telematics hardware, for example.

In some instances, it may be desirable that welding-type systems or setups may be configured to provide adaptive power control. In this regard, in various welding-type setups or systems, power supply control circuits typically may be used, such as to convert power from a primary source to an output suitable for welding operations. The output power is provided at an appropriate voltage or current level and may be controlled and regulated, such as according to the requirements of the welding process. Some welding processes require the output to be AC. For instance, typical high current AC outputs for gas tungsten arc welding (GTAW) or submerged arc welding (SAW) may require circuitry that efficiently generates a square wave output with a magnitude of several hundreds of amperes. Various circuit topologies may be used, being designed to meet the requirements of the welding process. For example, circuit topologies designed to meet the requirements set forth above may include a buck converter that steps down a supplied DC voltage, a full bridge inverter that converts the stepped down DC voltage to an AC output, and an output clamp circuit that suppresses output energy caused by, e.g., parasitic output inductance from welding cables during output current reversal.

However, conventional power supply control circuits may have some limitations and/or disadvantages. In particular, conventional power supply control circuits may not be able to handle the requirements of different welding processes, particularly both high-power and low-power processes. In this regard, low-power processes may comprise high speed advanced welding processes, such as Miller's Regulated Metal Deposition (RMD) process.

Another consideration is size and/or weight, with making product smaller and lighter being desirable objective. One approach to do so is to limit the power supply control circuits (e.g., power converter) to supporting only one type of welding processes, such as low-power processes (e.g., the RMD process), as opposed to high-power processes, such as MIG, Pulse, etc. However, doing so may reduce the features that the product may offer, which may not be desirable by the customers.

Solutions based on the present disclosure may overcome or at least mitigate some of the limitations and/or disadvantages of conventional solutions, while also yielding or allowing for smaller and lighter products. In particular, in various embodiments based on the present disclosure, power supply control circuits are used that are configured (e.g., by use of suitable topologies) for supporting and/or facilitating use of different welding processes, including both low-power and high-power processes.

One consideration for enabling such support is handling different power sources. In this regard, other than low-power process, such as RMD which is a delicate process thus requiring handling in the power supply control circuits, other types of welding processes, particularly high-power processes such as MIG welding, may be supplied directly from a main power source (e.g., Miller XMT) without a point of load (POL) conversion. This may be achieved by various means, such as by: 1) using a point of load (POL) converter that is designed for the full power, 2) designing the POL converter for low-power processes (e.g., the RMD process) only, and using electromechanical relays to switch the output from POL converter to the main power source output, and 3) designing the POL converter for low-power processes (e.g., the RMD process) only, with the capability to pass through the current required for high-power processes (e.g., MIG) through the semiconductors with no switching-that is, replacing electromechanical relays).

Another consideration that must be accounted for is current drops. In this regard, as noted, the fast current drop ( $-\Delta i/\Delta t$ ) in low-power processes (e.g., the RMD process) is important consideration for the weld quality and/or for reducing spatters. As such, in various example embodiments based on the present disclosure recycler circuits are used in conjunction with the converter circuit. In this regard, in various implementations, at the high level, recycler circuit may comprise two switches (or one switch and one diode), configured for facilitate fast current decrease during the short-clear stage of the low-power process (e.g., the RMD process).

Example embodiments in accordance with the present disclosure are described in more detail below. In this regard, while various implementations are described herein in terms of handling particular processes, such as the RDM process, it should be understood that the disclosure is not limited to particular processes, and that solutions based on the present disclosure may be used with any and all suitable welding processes.

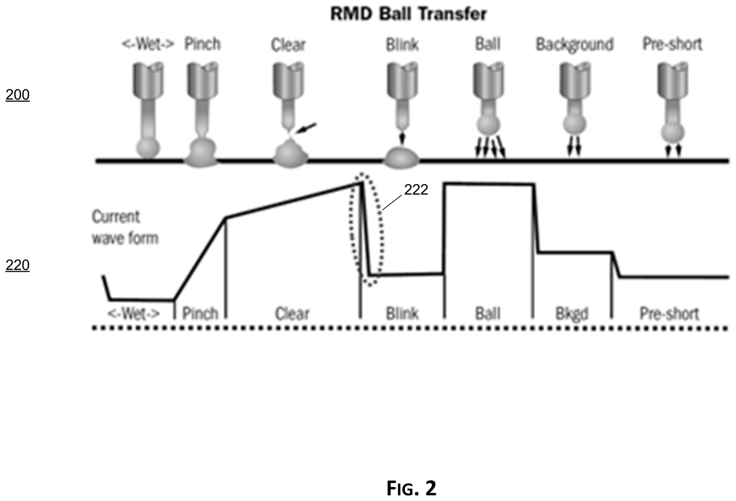

Fig. 2 illustrates an example regulated metal deposition (RMD) process and the corresponding current waveform. Shown in Fig. 2 is an example RDM process 200 and a current waveform chart 220.

As shown in Fig. 2, the RDM process 200 comprises a sequence of steps and/or actions, starting with, e.g., wet-in step, followed by pinch step, then clear step, then blink step, then ball step, then background step, then pre-short step. The current waveform chart 220 shows the current waveform of the welding current for each of these steps throughout the RDM process 200. As illustrated by current waveform chart 220, there is a fast current drop 222 at the end of the clear step. Other low-power processes may similarly incorporate and/or require such fast current drops.

As described herein, power converters incorporating topology implemented in accordance with the present disclosure may be configured to support and/or handle such fast current drops when performing low-power processes, such as the RDM process 200. This is described in more detail below.

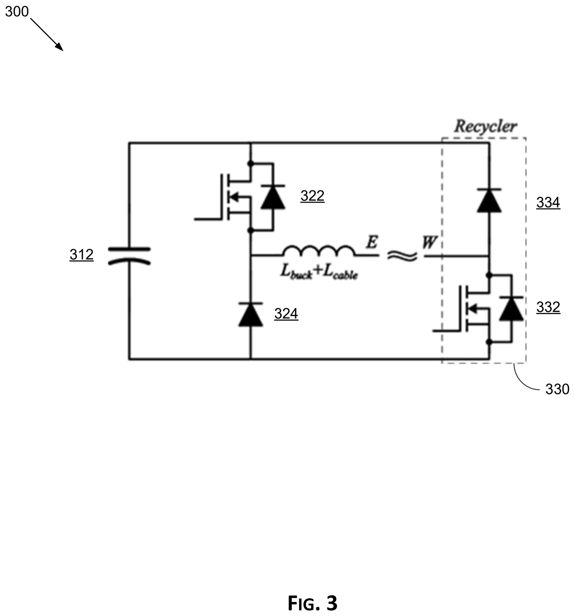

Fig. 3 illustrates an example two-quadrant buck converter. Shown in Fig. 3 is buck converter 300. In this regard, the buck converter 300 may be two-quadrant buck converter-that is, a non-synchronous buck converter with a non-synchronous recycler.

As shown in Fig. 3, the buck converter 300 comprises an input circuit, comprising a capacitor 312, and modulation circuit, comprising a switch 322 and a diode 324, with the buck converter 300 connected to a non-synchronous recycler 330, comprising a switch 332 and a diode 334.

The buck converter 300 may be utilized in supporting performing low-power processes, such as the RMD process 200 illustrated in Fig. 2.

In this regard, for the low-power process, the converter may be required to switch the low-power process current at high frequencies. Therefore, achieving low switching losses for the low-power process current may be one main focus for designing the POL converter. To pass through high power weld currents (e.g., MIG, etc.), it may be preferred that components in the converters (e.g., switches) have low conduction losses. As such, the switches may need to have low $R_{DS,on}$. For the pass through current, switches do not need to switch the weld current and only stay "ON" and conduct the high-power process current. For the recycler, the low-side switch will need to pass through the high-power weld current continuously. During low-power process, the lower switch needs to switch at the weld process frequency (~100Hz). The high-side switch (diode) needs to conduct only low-power process current at the low-power process weld process frequency (~100Hz).

To achieve low $R_{DS,on}$ for the pass-through current, either low $R_{DS,on}$ switch may be used, or multiple switches may be placed in parallel to achieve the low $R_{DS,on}$. Normally, switches with low switching losses suffer from higher $R_{DS,on}$ compared to the switches with higher switching losses.

One approach is to parallel multiple switches with high switching performance to achieve low $R_{DS,on}$. Such approach may have some drawbacks, however. One drawback may be that switches with better switching loss performances are more expensive compared to the low $R_{DS,on}$ switches. Therefore, the cost will increase significantly. Another drawback is the need to drive the switches simultaneously, which depending on the number of parallel switches may be challenging and add additional costs to the gate driver circuitry. Another approach is to parallel a high switching performance switch with a low $R_{DS,on}$ switch. The low $R_{DS,on}$ switch is OFF during the POL converter operation (low-power process welding) while the other switch operates. During the pass-through period for the high power processes the low $R_{DS,on}$ switch turns ON and conducts, while the other switch is OFF or ON.

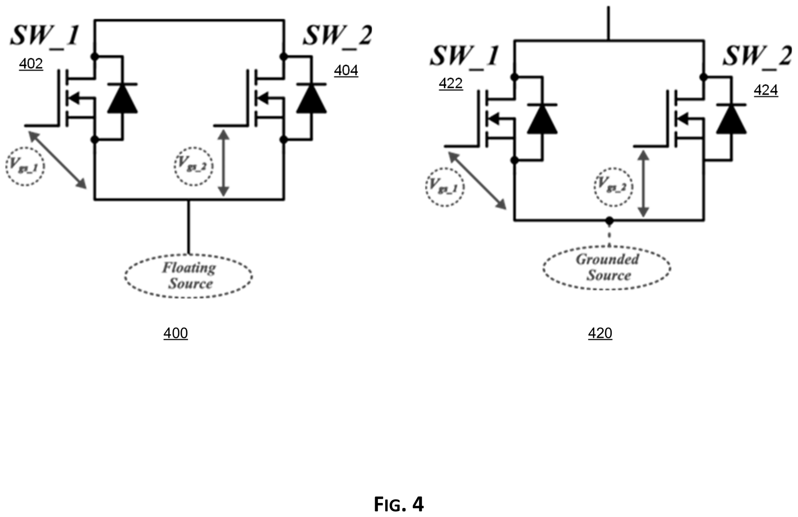

However, paralleling switches with different characteristics and/or different technologies may be challenging and/or may cause some issues (e.g., gate signal interference and/or gate signal crosstalk). Such issues may be more significant with particular switches and/or particular arrangements, such as when using high-side switching (e.g., MOSFET source(s) connected to a floating node, such as the top side switch on a half-bridge converter). Thus, use of low-side switching may eliminate or at least mitigate some of these issues. Paralleling switches on the high-side (high-side position) and on the low-side (low-side position) are illustrated in Fig. 4.

As shown in Fig. 3, the current topology of the buck converter 300 uses a high-side switching arrangement. As noted, this may cause some issues, particularly during switching between different processes. Accordingly, low-side switching based design may be used in the buck converter instead, which may allow for making the paralleling switches less complex. Such topology is described in more detail below.

Fig. 4 illustrates example parallel switches in high-side position and low-side position. Shown in Fig. 4 are switches 400 and 420.

Each of the switches 400 and 420 comprise two switch circuits-namely, first switch (SW_1) circuit 402 and second switch (SW_2) circuit 404 in switch 400, and first switch (SW_1) circuit 422 and second switch (SW_2) circuit 424 in switch 420.

However, the switches 400 and 420 represent different types of arrangements, with the switch 400 having high-side position-that is, with the low-side of the switch circuit connected to a floating source, and the switch 420 having low-side position-that is, with the low-side of the switch circuit connected to a grounded source. As noted above, use of switches arranged in the low-side position may address some of the issues that may otherwise arise when using switches arranged in the high-side position, such as gate signal interference and/or gate signal crosstalk.

As shown in Fig. 4, each of the first switch circuits (402, 422) and the second switch circuits (404, 424) may comprise a switch transistor and a switch diode. The first switch circuits (402, 422) and second switch circuits (404, 424) may differ, such as by using different switch transistors. For example, one of the first switch circuits and the second switch circuits may comprise silicon carbide MOSFET(s), whereas the other one may comprise silicon (only) MOSFET(s). This allow for use of one of switches to provide the point of load (POL) conversion when needed for particular type of processes, while the other one being used to simply turn one the switch and keep it one when handling other types of processes.

In some instances, the switch transistors of the first switches (402, 422) may comprise a plurality of transistors arranged in parallel. Further, in some instances, at least some of the transistors in the plurality of transistors may be of different type compared to other transistors in the plurality of transistors.

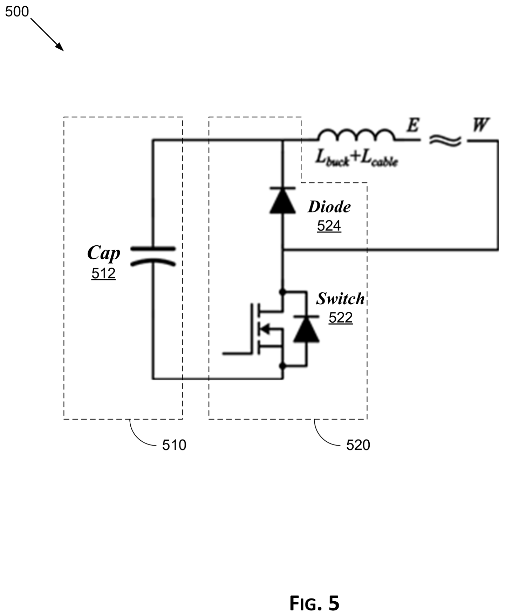

Fig. 5 illustrates an example low-side buck converter. Shown in Fig. 5 is low-side buck converter circuit 500.

As shown in Fig. 5, the low-side buck converter circuit 500 comprises an input circuit 510 and a modulation circuit 520. The input circuit 510 may comprise at least one capacitor 512. The modulation circuit 520 comprises a buck switch (SW_Buck) 522 and a buck diode (D_Buck) 524. In this regard, the SW_Buck 522 and the D_Buck 524 may be arranged with the SW_Buck 522 at the low-side of the modulation circuit 520, and with the low-side of the D_Buck 524 connected to the high-side of the SW_Buck 522. The modulation circuit 520 and the input circuit 510 are connected in parallel, as shown in Fig. 5.

The SW_Buck 522 may comprise a converter switch transistor and a converter switch diode. The converter switch transistor may comprise metal-oxide-semiconductor field-effect transistor (MOSFET). The converter switch diode may be connected between two non-gate terminals of the converter switch transistor (e.g., between a source terminal and a drain terminal when the converter switch transistor comprises a MOSFET, as shown in Fig. 5).

In some instances, the converter switch transistor may comprise a plurality of transistor circuits connected in parallel. The transistor circuits may be similar, or in some instances, at least one of the transistor circuits may be of a different type.

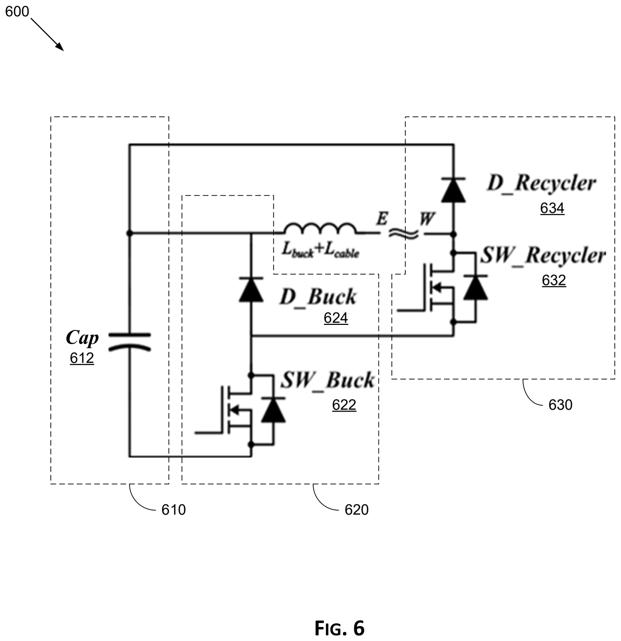

As noted, use of switch(es) arranged in the low-side positions, as shown in low-side buck converter circuit 500, may allow for improved performance, particularly with respect to handling switching between different weld processes. However, it may not be possible to simply incorporate low-side buck converter circuits (e.g., the low-side buck converter circuit 500) into circuit topology such as the one illustrated in Fig. 3. In this regard, the recycler circuit can no longer stay in the same position as was shown in Fig. 3. To properly send the power back to the DC link during the $-\Delta i/\Delta t$ the circuit topology may be modified, such as by placing the recycler circuit between the secondary "work" and the DC link positive node. Such circuit topology is shown and described with respect to Fig. 6.

Fig. 6 illustrates an example power control topology with low-side buck converter with recycler. Shown in Fig. 6 is power control topology 600. The power control topology 600 may be configured for providing high-performance point of load (POL) conversion when supporting low-power process (e.g., the RMD process), with minimum complexity in implementation.

As shown in Fig. 6, the power control topology 600 comprises (combines) low-side buck converter circuit (e.g., substantially similar to the low-side buck converter 500 of Fig. 5) and recycler circuit 630. As such, power control topology 600 may represent a modification of the power control topology illustrated in Fig. 3, with the switches of buck converter circuit being arranged in the low-side position.

In this regard, the low-side buck converter circuit comprises an input circuit 610 and a modulation circuit 620, which may be substantially similar to, respectively, the input circuit 510 and the modulation circuit 520 of the low-side buck converter 500. As such, the input circuit 610 may comprise at least one capacitor 612, whereas the modulation circuit 620 comprises a buck switch (SW_Buck) 622 and a buck diode (D_Buck) 624.

In this regard, the SW_Buck 622 and the D_Buck 624 may be arranged with the SW_Buck 622 at the low-side of the modulation circuit 620, and with the low-side of the D_Buck 624 connected to the high-side of the SW_Buck 622. The modulation circuit 620 and the input circuit 610 are connected in parallel, as shown in Fig. 6.

The SW_Buck 622 may comprise a converter switch transistor and a converter switch diode. The converter switch transistor may comprise metal-oxide-semiconductor field-effect transistor (MOSFET). The converter switch diode may be connected between two non-gate terminals of the converter switch transistor (e.g., between a source terminal and a drain terminal when the converter switch transistor comprises a MOSFET, as shown in Fig. 6). In some instances, the converter switch transistor may comprise a plurality of transistor circuits connected in parallel. The transistor circuits may be similar, or in some instances, at least one of the transistor circuits may be of a different type.

The recycler circuit 630 may comprise a recycler switch (SW_Recycler) 632 and a recycler switch diode (D_Recycler) 634. In this regard, the SW_Recycler 632 and the D_Recycler 634 may be arranged with the SW_Recycler 632 the low-side of the modulation circuit 520, and with the low-side of the D_Recycler 634 connected to the high-side of the SW_Recycler 632. The SW_Recycler 632 may have lower switching frequency than the SW_Buck 622 (e.g., 100 KHz for the SW_Buck 622 vs. 100 Hz for the SW_Recycler 632).

The SW_Recycler 632 may comprise a recycler switch transistor and a recycler switch diode. The recycler switch transistor may comprise metal-oxide-semiconductor field-effect transistor (MOSFET). The recycler switch diode may be connected between two non-gate terminals of the recycler switch transistor (e.g., between a source terminal and a drain terminal when the recycler switch transistor comprises a MOSFET, as shown in Fig. 6).

In some instances, one or both of the D_Buck 624 and D_Recycler 634 may be replaced with active switches.

The recycler circuit 630 may be connected to the low-side buck converter circuit in adaptive manner, to optimize performance. For example, recycler circuit 630 may be connected such that a low-side of the recycler circuit 630 is connected to an intermediate point in the modulation circuit 620 of the low-side buck converter circuit. For example, the recycler circuit 630 may be connected to the modulation circuit 620 such as the low-side of the SW_Recycler 632 is connected to the high-side of the SW_Buck 622, as shown in Fig. 6. The high-side of the recycler circuit 630 may be connected to a high-side of the input circuit 610 of the low-side buck converter circuit. Further, during active welding, the weld current may pass between a high-side of the modulation circuit 620 and an intermediate point in recycler circuit 630, as shown in Fig. 6.

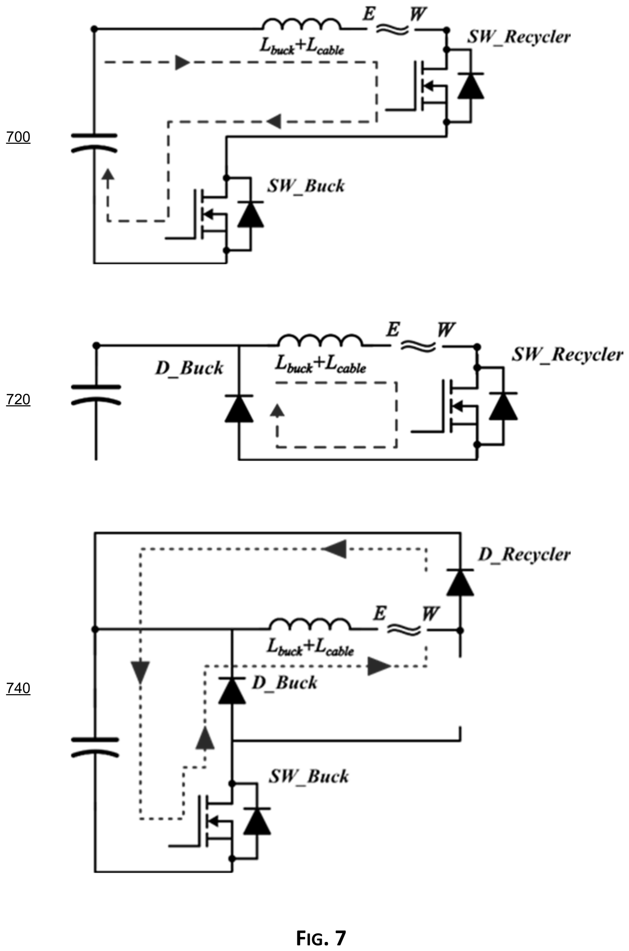

The power control topology 600 may have a plurality of different modes of operation, such as based on the states of the different components thereof (e.g., the SW_Recycler 632 and the SW_Buck 622). This is described in more detail with respect to Fig. 7.

Fig. 7 illustrates different modes of operation for a power control topology with low-side buck converter with recycler. Shown in Fig. 7 are different modes of operations in the power control topology 600 of Fig. 6.

In this regard, during low-power process (e.g., the RMD process), the SW_Recycler 632 is "ON" while SW_Buck 622 switches the low-power process current. When SW_Buck 622 is also "ON", the power control topology 600 has the power path shown in mode of operation 700. When SW_Buck 622 is "OFF", the power control topology 600 has the power path shown in mode of operation 720. As noted, in both modes of operation 700 and 720 the SW_Recycler 632 is "ON." In mode of operation 740, during current drop ( $-\Delta i/\Delta t$ ), to achieve the desired faster current decrease, SW_Recycler 632 turns "OFF" and D_Recycler 634 starts conducting. SW_Buck 622 receives the gate signal and conducts in the opposite direction (MOSFETs are bidirectional devices that can conduct in either direction), and D_Buck 624 conducts the weld current back.

For the pass-through mode, SW_Buck and SW_Recycler turn ON and stay ON. It should be noted that during the switching mode (RMS), the low switching loss switch is working, while during the pass-through, the low $R_{DS,on}$ parallel switch is conducting with or without the other switch ON.

Accordingly, solutions based on the present disclosure may provide compact, lightweight, and high-performance POL converters for low-power processes (e.g., RMD process), with minimum complexity in implementation. In this regard, embodiments based on the present disclosure may have such advantages as less complexity for paralleling devices due to the low-side buck (thus, simpler gate drive, less gate signal interference and/or gate signal crosstalk, etc.), use of recycles to achieve fast current decrease without increasing the hardware requirement compared to the high-side buck, enabling mixing of different switching technologies with different gate-source requirements, achieves low losses during pass through (low $R_{DS,on}$ switch), achieving low losses during RMD switching (low switching loss switch).

An example welding-type system, in accordance with the present disclosure, comprises: a wire feeder controller configured for controlling wire feeding functions in the welding-type system; wherein the wire feeder controller comprises a power converter configured for handling a high speed advanced welding process; wherein the power converter comprises a circuit topology comprising a low-side buck converter circuit and a recycler circuit; wherein the low-side buck converter circuit comprises an input circuit and a modulation circuit; and wherein a low-side of the recycler circuit is connected to an intermediate point in the modulation circuit of the low-side buck converter circuit.

In an example embodiment, the input circuit comprises a capacitor.

In an example embodiment, the modulation circuit comprises a converter switch at a low-side of the modulation circuit.

In an example embodiment, the low-side of the modulation circuit comprises a grounded source.

In an example embodiment, the converter switch comprises a converter switch transistor and a converter switch diode.

In an example embodiment, the converter switch diode is connected between two non-gate terminals of the converter switch transistor. For example, in instances where the converter switch transistor comprises a metal-oxide-semiconductor field-effect transistor (MOSFET), the recycler switch diode is connected between a source terminal and a drain terminal of the MOSFET of the converter switch transistor.

In an example embodiment, the converter switch transistor comprises a metal-oxide-semiconductor field-effect transistor (MOSFET).

In an example embodiment, the converter switch transistor comprises a plurality of transistor circuits connected in parallel.

In an example embodiment, at least one transistor circuit of the plurality of transistor circuits is of a different type than at least one other transistor circuit of the plurality of transistor circuits.

In an example embodiment, the modulation circuit comprises a converter switch diode at a high-side section of the modulation circuit.

In an example embodiment, the recycler circuit comprises a recycler switch at a low-side of the recycler circuit.

In an example embodiment, the recycler switch comprises a recycler switch transistor and a recycler switch diode.

In an example embodiment, the recycler switch diode is connected between two non-gate terminals of the recycler switch transistor. For example, in instances where the recycler switch transistor comprises a metal-oxide-semiconductor field-effect transistor (MOSFET), the recycler switch diode is connected between a source terminal and a drain terminal of the MOSFET.

In an example embodiment, the recycler switch transistor comprises a metal-oxide-semiconductor field-effect transistor (MOSFET).

In an example embodiment, the modulation circuit comprises a converter switch, and wherein the recycler switch has a switching frequency that is lower than a switching frequency of the converter switch.

In an example embodiment, the modulation circuit comprises a converter switch, and wherein a low-side of the recycler switch is connected to a high-side of the converter switch.

In an example embodiment, the recycler circuit comprises a recycler switch diode at a high-side of the recycler circuit.

In an example embodiment, a high-side of the recycler circuit is connected to a high-side of the input circuit of the low-side buck converter circuit.

In an example embodiment, a weld current passes between a high-side of the modulation circuit and an intermediate point in recycler circuit.

Other implementations in accordance with the present disclosure may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the processes as described herein.

Accordingly, various implementations in accordance with the present disclosure may be realized in hardware, software, or a combination of hardware and software. The present disclosure may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may be a general-purpose computing system with a program or other code that, when being loaded and executed, controls the computing system such that it carries out the methods described herein. Another typical implementation may comprise an application specific integrated circuit or chip.

Various implementations in accordance with the present disclosure may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present disclosure has been described with reference to certain implementations, it will be understood by those skilled in the art that various changes may be made and equivalents may be substituted without departing from the scope of the present disclosure. For example, block and/or components of the disclosed examples may be combined, divided, re-arranged, and/or otherwise modified. In addition, many modifications may be made to adapt a particular situation or material to the teachings of the present disclosure without departing from its scope. Therefore, it is intended that the present disclosure not be limited to the particular implementation disclosed, but that the present disclosure will include all implementations falling within the scope of the appended claims.

Certain embodiments of the invention are described in the following clauses:

Clause 1 A welding-type system, comprising:

a wire feeder controller configured for controlling wire feeding functions in the welding-type system;

wherein the wire feeder controller comprises a power converter configured for handling a high speed advanced welding process;

wherein the power converter comprises a circuit topology comprising a low-side buck converter circuit and a recycler circuit;

wherein the low-side buck converter circuit comprises an input circuit and a modulation circuit; and

wherein a low-side of the recycler circuit is connected to an intermediate point in the modulation circuit of the low-side buck converter circuit.

Clause 2 The welding-type system according to clause 1, wherein the input circuit comprises a capacitor.

Clause 3 The welding-type system according to clause 1, wherein the modulation circuit comprises a converter switch at a low-side of the modulation circuit.

Clause 4 The welding-type system according to clause 3, wherein the low-side of the modulation circuit comprises a grounded source.

Clause 5 The welding-type system according to clause 3, wherein the converter switch comprises a converter switch transistor and a converter switch diode.

Clause 6 The welding-type system according to clause 5, wherein the converter switch diode is connected between two non-gate terminals of the converter switch transistor.

Clause 7 The welding-type system according to clause 5, wherein the converter switch transistor comprises a metal-oxide-semiconductor field-effect transistor (MOSFET).

Clause 8 The welding-type system according to clause 5, wherein the converter switch transistor comprises a plurality of transistor circuits connected in parallel.

Clause 9 The welding-type system according to clause 8, wherein at least one transistor circuit of the plurality of transistor circuits is of a different type than at least one other transistor circuit of the plurality of transistor circuits.

Clause 10 The welding-type system according to clause 1, wherein the modulation circuit comprises a converter switch diode at a high-side section of the modulation circuit.

Clause 11 The welding-type system according to clause 1, wherein the recycler circuit comprises a recycler switch at a low-side of the recycler circuit.

Clause 12 The welding-type system according to clause 11, wherein the recycler switch comprises a recycler switch transistor and a recycler switch diode.

Clause 13 The welding-type system according to clause 12, wherein the recycler switch diode is connected between two non-gate terminals of the recycler switch transistor.

Clause 14 The welding-type system according to clause 12, wherein the recycler switch transistor comprises a metal-oxide-semiconductor field-effect transistor (MOSFET).

Clause 15 The welding-type system according to clause 11, wherein the modulation circuit comprises a converter switch, and wherein the recycler switch has a switching frequency that is lower than a switching frequency of the converter switch.

Clause 16 The welding-type system according to clause 11, wherein the modulation circuit comprises a converter switch, and wherein a low-side of the recycler switch is connected to a high-side of the converter switch.

Clause 17 The welding-type system according to clause 1, wherein the recycler circuit comprises a recycler switch diode at a high-side of the recycler circuit.

Clause 18 The welding-type system according to clause 1, wherein a high-side of the recycler circuit is connected to a high-side of the input circuit of the low-side buck converter circuit.

Clause 19 The welding-type system according to clause 1, wherein a weld current passes between a high-side of the modulation circuit and an intermediate point in the recycler circuit.

**Claims**

1. A welding-type system, comprising:

   a wire feeder controller configured for controlling wire feeding functions in the welding-type system;
   wherein the wire feeder controller comprises a power converter configured for handling a high speed advanced welding process;
   wherein the power converter comprises a circuit topology comprising a low-side buck converter circuit and a recycler circuit;
   wherein the low-side buck converter circuit comprises an input circuit and a modulation circuit; and
   wherein a low-side of the recycler circuit is connected to an intermediate point in the modulation circuit of the low-side buck converter circuit.

2. The welding-type system according to claim 1, wherein the input circuit comprises a capacitor.

3. The welding-type system according to claim 1, wherein the modulation circuit comprises a converter switch at a low-side of the modulation circuit.

4. The welding-type system according to claim 3, wherein the low-side of the modulation circuit comprises a grounded source.

5. The welding-type system according to claim 3, wherein the converter switch comprises a converter switch transistor and a converter switch diode.

6. The welding-type system according to claim 5, wherein the converter switch diode is connected between two non-gate terminals of the converter switch transistor, or
   wherein the converter switch transistor comprises a metal-oxide-semiconductor field-effect transistor (MOSFET).

7. The welding-type system according to claim 5, wherein the converter switch transistor comprises a plurality of transistor circuits connected in parallel, and optionally
   wherein at least one transistor circuit of the plurality of transistor circuits is of a different type than at least one other transistor circuit of the plurality of transistor circuits.

8. The welding-type system according to claim 1, wherein the modulation circuit comprises a converter switch diode at a high-side section of the modulation circuit.

9. The welding-type system according to claim 1, wherein the recycler circuit comprises a recycler switch at a low-side of the recycler circuit.

10. The welding-type system according to claim 9, wherein the recycler switch comprises a recycler switch transistor and a recycler switch diode.

11. The welding-type system according to claim 10, wherein the recycler switch diode is connected between two non-gate terminals of the recycler switch transistor.

12. The welding-type system according to claim 10, wherein the recycler switch transistor comprises a metal-oxide-semiconductor field-effect transistor (MOSFET).

13. The welding-type system according to claim 9, wherein the modulation circuit comprises a converter switch, and wherein the recycler switch has a switching frequency that is lower than a switching frequency of the converter switch, or wherein the modulation circuit comprises a converter switch, and wherein a low-side of the recycler switch is connected to a high-side of the converter switch.

14. The welding-type system according to claim 1, wherein the recycler circuit comprises a recycler switch diode at a high-side of the recycler circuit.

15. The welding-type system according to claim 1, wherein a high-side of the recycler circuit is connected to a high-side of the input circuit of the low-side buck converter circuit, or wherein a weld current passes between a high-side of the modulation circuit and an intermediate point in the recycler circuit.

FIG. 1

**RMD Ball Transfer**

FIG. 2

**FIG. 3**

FIG. 4

EP 4 755 564 A1

**FIG. 5**

EP 4 755 564 A1

FIG. 6

$L_{buck}+L_{cable}$  E  W  SW_Recycler

SW_Buck

700

D_Buck  $L_{buck}+L_{cable}$  E  W  SW_Recycler

720

D_Recycler

E  W

$L_{buck}+L_{cable}$

D_Buck

SW_Buck

740

FIG. 7

Europäisches
Patentamt

European
Patent Office

Office européen
des brevets

# EUROPEAN SEARCH REPORT

| Application Number |
| --- |
| **EP 25 22 0198** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| A | US 2020/376582 A1 (SALSICH ANTHONY VAN BERGEN [US]) 3 December 2020 (2020-12-03) * paragraph [0028] - paragraph [0044]; figures 3,4,5A,5B * | 1-15 | INV. B23K9/10 |

TECHNICAL FIELDS SEARCHED (IPC)

B23K

The present search report has been drawn up for all claims

| Place of search | Date of completion of the search | Examiner |
| --- | --- | --- |
| Munich | 2 April 2026 | De Backer, Tom |

EPO FORM 1503 03.82 (P04C01)

## ANNEX TO THE EUROPEAN SEARCH REPORT
## ON EUROPEAN PATENT APPLICATION NO.

EP 25 22 0198

This annex lists the patent family members relating to the patent documents cited in the above-mentioned European search report.
The members are as contained in the European Patent Office EDP file on
The European Patent Office is in no way liable for these particulars which are merely given for the purpose of information.

02-04-2026

| Patent document cited in search report | Publication date | Patent family member(s) | Publication date |
|---|---|---|---|
| US 2020376582 A1 | 03-12-2020 | CN 102947041 A | 27-02-2013 |
| | | EP 2582483 A1 | 24-04-2013 |
| | | US 2011309054 A1 | 22-12-2011 |
| | | US 2015375329 A1 | 31-12-2015 |
| | | US 2020376582 A1 | 03-12-2020 |
| | | WO 2011159734 A1 | 22-12-2011 |

EPO FORM P0459

For more details about this annex : see Official Journal of the European Patent Office, No. 12/82

# EP 4 755 564 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 63728436